(19) **Europäisches Patentamt**
**European Patent Office**
**Office européen des brevets**

(11) **EP 1 262 735 A1**

(12) **EUROPÄISCHE PATENTANMELDUNG**

(43) Veröffentlichungstag:
**04.12.2002 Patentblatt 2002/49**

(51) Int Cl.⁷: **G01B 9/02**, G01J 9/02

(21) Anmeldenummer: **02011008.6**

(22) Anmeldetag: **17.05.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.05.2001 DE 10125785**

(71) Anmelder: **CARL ZEISS SEMICONDUCTOR MANUFACTURING TECHNOLOGIES AG**
**73447 Oberkochen (DE)**

(72) Erfinder:
• **Freimann, Rolf**
**73431 Aalen (DE)**
• **Mayer, Maximilian**
**73434 Aalen-Dewangen (DE)**
• **Reichelt, Stephan**
**70771 Leinfelden-Echterdingen (DE)**

(74) Vertreter: **Lorenz, Werner, Dr.-Ing.**
**Lorenz & Kollegen**
**Patent- und Rechtsanwaltskanzlei**
**Alte Ulmer Strasse 2-4**
**89522 Heidenheim (DE)**

(54) **Verfahren zur Absolutkalibrierung eines Interferometers**

(57) Bei einem Verfahren zur Absolutkalibrierung eines Interferometers (1) mit einer kugelförmigen Ausgangswelle, mit einem optischen Element (4,4'), das die einfallende Kugelwelle selbst oder über einen Spiegel (7) zurückreflektiert, werden zur Bestimmung der Wellenaberration (W) wenigstens vier Meßvorgänge vorgenommen. Das optische Element (4,4') wird in den wenigstens vier Meßstellungen intrafokal und extrafokal in wenigstens zwei unterschiedlichen Drehwinkelstellungen vermessen. Zusätzlich kann noch eine Messung über einen Spiegel (6) in der Katzenaugenstellung (Fokus 3) vorgenommen werden.

Fig. 1

EP 1 262 735 A1

## Beschreibung

Die Erfindung betrifft ein Verfahren zur Absolutkalibrierung eines Interferometers mit einer kugelförmigen Ausgangswelle.

Die Erfindung betrifft auch ein Verfahren zur Bestimmung der Meßgenauigkeit eines Schreibgerätes für ein diffraktives optisches Element.

Zur absoluten Bestimmung der Meßfehler von Interferometern zur Passeprüfung sphärischer Oberflächen werden in der Praxis zwei Verfahren eingesetzt, nämlich der klassische Drei-Stellungs-Test und das Dreh-Schiebe-Verfahren. Der Hauptnachteil der bekannten Verfahren liegt in der geringen Anzahl an Absolutkalibrierverfahren für Interferometer mit sphärischer Ausgangswelle. Jedes Verfahren ist dabei mit Fehlern behaftet und um diese näher zu bestimmen, wären zusätzliche Absolutkalibrierverfahren zum Vergleich sehr vorteilhaft.

Der vorliegenden Erfindung liegt die Aufgabe zugrunde, ein neues Absolutkalibrierverfahren für Interferometer mit sphärischer Ausgangswelle zu schaffen, durch das mindestens genauso gut gemessen werden kann, wie mit den bisher bekannten Verfahren, wodurch eine weitere Möglichkeit gegeben wird, die Genauigkeit der Absolutkalibrierung besser beurteilen zu können.

Erfindungsgemäß wird diese Aufgabe durch die in Anspruch 1 genannten Merkmale gelöst.

Ein wesentliches Merkmal der Erfindung bildet dabei das optische Element, das die einfallende Kugelwelle selbst oder über einen Spiegel zurückreflektiert. In einer vorteilhaften Ausgestaltung wird man hierfür ein rotationssymmetrisches diffraktives optisches Element in Reflexion oder in Transmission mit einem Spiegel verwenden. Dabei ist das optische Element bzw. das diffraktive optische Element so zu gestalten, daß bei zwei Positionen die zunächst konvergente sphärische Ausgangswelle des Interferometers bei einem reflexions-diffraktiven optischen Element, nachfolgend verkürzt DOE genannt, in sich zurück reflektiert oder dies in Kombination mit einem dahinter angeordneten Spiegel als Transmissions-DOE. Dieser muß in den einzelnen Drehstellungen genauso wie das DOE gedreht sein.

In letzterer Variante kann man das DOE auch als off-axis DOE mit linearem Träger (räumlich konstante Trägerfrequenz) ausführen. Der Spiegel muß wegen des linearen Trägers entsprechend gekippt sein. Zwischen intra- und extrafokaler Stellung ändert sich das Vorzeichen des Kippwinkels, während sein Betrag gleich bleibt. Diese Möglichkeit erweitert das Spektrum erfindungsgemäß absolut vermeßbarer DOEs.

Der Erfinder ging dabei von der Kenntnis aus, daß das DOE in der einen Position in der +1. oder ganz allgemein gesprochen einer +m-ten Beugungsordnung und in der anderen Position in der -1. bzw. allgemeiner in einer -m-ten Beugungsordnung arbeitet. Auf diese Weise dreht sich das Vorzeichen der DOE-Aberrationen um, während die Vorzeichen aller anderen Systemfehler gleich bleiben.

In einer vorteilhaften Ausgestaltung der Erfindung wird zusätzlich noch eine Messung in der Katzenaugenposition bzw. der Fokusstellung vorgenommen. Hierzu muß nicht das DOE verwendet werden, sondern in einfacher Weise kann hier auch ein Spiegel, im allgemeinen ein Planspiegel, verwendet werden. Wenn man ein hochplanes DOE-Substrat verwendet und dessen Passefehler separat interferometrisch oder taktil bestimmt, kann auf die Katzenaugenstellung auch verzichtet werden. Dabei kann man beim Schreiben des DOE einen Weg wählen, bei dem sichergestellt ist, daß das DOE-Substrat Passefehler nicht verändert.

Mit dem erfindungsgemäßen Meßverfahren erhält man Interferometerfehler absolut, Passefehler vom DOE und DOE-Aberrationen absolut.

Der Grundgedanke der vorliegenden Erfindung ist auch zur Bestimmung der Meßgenauigkeit eines Schreibgerätes für ein diffraktives optisches Element (DOE) verwendbar. Dabei läßt sich die Qualität eines Schreibgerätes absolut bestimmen. Die Wellenaberration des DOE wird dabei aus der Wellenaberration in der intrafokalen Stellung abzüglich der Wellenaberration in der extrafokalen Stellung bestimmt, wobei man den DOE-Fehler absolut erhält.

Vorteilhafte Ausgestaltungen und Weiterbildungen ergeben sich aus den übrigen Unteransprüchen und aus dem nachfolgend anhand der Zeichnung prinzipmäßig beschriebenen Ausführungsbeispiel.

Es zeigt:

Figur 1     eine Prinzipdarstellung des erfindungsgemäßen Verfahrens mit einem DOE in Reflexion;

Figur 2     ausschnittsweise die Prinzipdarstellung nach der Figur 1 mit einem DOE in Transmission und mit einem Planspiegel;

Figur 3     eine Grafik für den Kurvendichte-Verlauf bei einem Meß-DOE;

Figur 4     eine Grafik für den Kurvendichte-Verlauf bei einem Kalibrier-DOE;

Figur 5     eine Ansicht eines Meß-DOEs in Prinzipdarstellung;

Figur 6     eine Ansicht eines Kalibrier-DOEs in Prinzipdarstellung, und

Figur 7     eine Prinzipdarstellung betreffend die Elimination eines Schreibprozeßfehlers durch Absolutvermessung eines Kalibrier-DOEs bei einem Meß-DOE mit Prüfling.

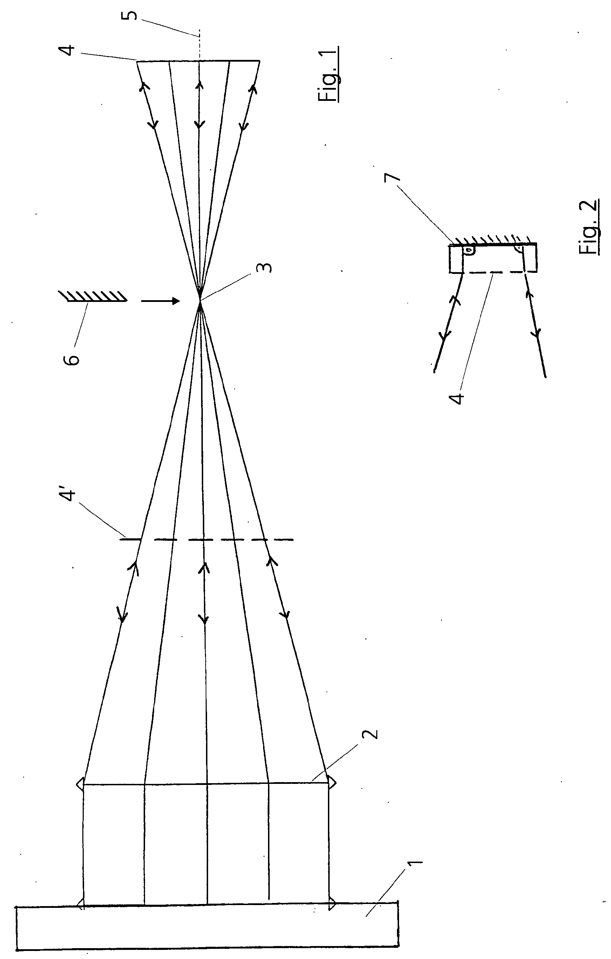

Zur Absolutkalibrierung eines Interferometers 1 mit einer Referenzfläche werden nach dem Ausführungsbeispiel gemäß Figur 1 fünf Messungen vorgesehen. Hierzu durchläuft eine kugelförmige Ausgangswelle des Interferometers ein Objektiv 2 hinter dem die Welle konvergiert. In Strahlenlaufrichtung hinter einem Fokus 3, nach welchem die Welle 2 wieder divergiert, ist als optisches Element in Reflexion ein DOE 4 angeordnet, welches die ankommende Kugelwelle in sich selbst zurück reflektiert. In dieser Position erfolgt eine erste Messung. In einer zweiten Messung wird das DOE 4 um 180° um die optische Achse 5 gedreht.

Anschließend wird das DOE 4 aus der vorstehend genannten extrafokalen Position in eine intrafokale Position gebracht, welche in der Figur 1 gestrichelt dargestellt und das DOE mit 4' bezeichnet ist. In dieser Position wird in der 0°-Stellung eine dritte Messung durchgeführt, wonach das DOE 4' um 180° um die optische Achse 5 gedreht wird und eine vierte Messung durchgeführt wird. Nach Entfernung des DOEs 4' wird ein Planspiegel 6 in Pfeilrichtung in eine Katzenaugenstellung bzw. in die Fokusstellung, d.h. in den Fokus 3 eingeschoben, und eine fünfte Messung durchgeführt.

In der intrafokalen Stellung arbeitet das DOE 4' in der +1.-Beugungsordnung, in der extrafokalen Stellung arbeitet das DOE 4 in der -1.-Beugungsordnung. In jedem Fall werden jedoch alle einfallenden Strahlen in sich zurückreflektiert. Dabei müssen die Strahlen nicht senkrecht auf dem DOE stehen, um in sich zurückzulaufen.

Wählt man ein DOE 4 in Transmission, so wird hinter das DOE 4 ein Planspiegel 7 angeordnet, von dem die senkrecht auftreffenden Strahlen reflektiert werden. Diese Ausgestaltung ist in der Figur 2 ausschnittsweise angedeutet. Auch hier erfolgen jeweils zwei mal zwei Messungen mit dem DOE in der intrafokalen und in der extrafokalen Stellung in zwei Drehwinkelstellungen mit jeweils einem dahinter angeordneten Planspiegel 4. In gleicher Weise erfolgt auch die Messung in der Katzenaugenstellung mit dem Planspiegel 6.

In vorteilhafter Weise wird man hierfür die Substratrückseite wählen. Es ist jedoch möglich einen Planspiegel 7 weiter weg anzuordnen. Dies ist insbesondere dann notwendig, falls das DOE als off-axis DOE mit linearem Träger ausgeführt ist, um den Planspiegel 7 verkippen zu können.

Durch die insgesamt fünf Messungen kann man die aufgrund von Schreibfehlern verursachten DOE-Aberrationen $W_{DOE}$, die Substratpassefehler $W_{Passe}$ und die Interferometerfehler $W_{int}$ getrennt und absolut bestimmen. Bei einem DOE in Transmission gehen die Inhomogenitäten des Substrats sowie die Passefehler des Planspiegels in die Substratpassefehler $W_{Passe}$ mit ein und können nicht getrennt bestimmt werden. Man braucht mit fünf Messungen zwei mehr als beim klassischen Dreistellungstest für sphärische Prüflinge, weil hier nicht nur Prüflingspassefehler, sondern auch die DOE-Aberrationen bestimmt werden müssen.

Zum Meßvorgang selbst:

Messung 1:     DOE intrafokal, Drehwinkel 0° relativ zu einem Bezugspunkt im Raum, Meßgröße $W_{10}$

Messung 2:     DOE intrafokal, Drehwinkel 180° relativ zum gewählten Bezugspunkt, Meßgröße $W_{I180}$

Messung 3:     Katzenaugenstellung, Meßgröße $W_{CAT}$

Messung 4:     DOE extrafokal, Drehwinkel 0° relativ zum Bezugspunkt, Meßgröße $W_{E0}$

Messung 5:     DOE extrafokal, Drehwinkel 180° relativ zum Bezugspunkt, Meßgröße $W_{E180}$

W kennzeichnet dabei jeweils die mit dem Interferometer 1 im doppelten Durchtritt gemessene Wellenaberration W und wird positiv gezählt, wenn die Wellenfront einer Referenzwellenfront in Strahlrichtung gesehen vorwegeilt.

Passefehler vom DOE-Substrat gehen genaugenommen in der intraund extrafokalen Stellung leicht unterschiedlich ein, da die einfallenden Strahlen von unterschiedlichen Richtungen auftreffen. In einer numerischen Simulation mit einem Optikrechenprogramm wurde aber festgestellt, daß bei den üblichen, langwelligen Passefehlern wie Defokus, sphärischer Aberration oder ähnlichen Zernike-Fehlern bis zu einer Größe von einer Wellenlänge p-v dieser Unterschied kleiner als 1 Promille bleibt. In der Praxis sind die Passefehler weitaus kleiner, so daß die Meßfehler durch diese Richtungsabhängigkeit vernachlässigbar klein bleiben.

Das Vorzeichen der DOE-Aberration dreht sich in der extrafokalen Stellung gegenüber der intrafokalen Stellung um.

Zur Auswertung sind folgende Auswerteformeln nötig:

$$W_{I0} = W_R + W_{APL} + W_{DOE} + W_{PASSE}$$

$$W_{I180} = W_R + W_{APL} + \overline{W}_{DOE} + \overline{W}_{PASSE}$$

$$W_{CAT} = W_R + \frac{W_{APL} + \overline{W}_{APL}}{2}$$

$$W_{E0} = W_R + W_{APL} - \overline{W}_{DOE} + \overline{W}_{PASSE}$$

$$W_{E180} = W_R + W_{APL} - W_{DOE} + W_{PASSE} \qquad (1a \ldots 1e)$$

Dabei sind:

W_R:  Gemessene Wellenaberration aufgrund von Referenzflächenfehlern.
W_APL:  Gemessene Wellenaberration aufgrund von Fehlern in der Interferometeroptik, beispielsweise im Interferometerobjektiv Aplanat oder aufgrund von Referenzflächenfehlern, die bei der speziellen Referenzflächenanordnung auch im Durchtritt wirken.
W_DOE:  Gemessene Wellenaberration, hervorgerufen durch DOE-Schreibfehler.
W_PASSE:  Gemessene Wellenaberration, hervorgerufen durch Passefehler DOE-Substrat, gegebenenfalls inklusive der Planspiegelpassefehler bei einem DOE in Transmission.
W_INT:  Interferometerfehler, das ist die Summe aus W_R und W_APL:

$$W_{INT} = W_R + W_{APL} \qquad (2)$$

Gemäß den erwähnten Auswerteformeln bildet man aus (1a ... 1e) folgende zwei Zwischengrößen, wobei man in Kombination mit der Katzenaugenstellung jeweils die beiden intrafokalen oder die extrafokalen Positionen einfließen läßt:

$$W_I = \frac{W_{I0} + \overline{W}_{I180}}{2} - \frac{W_{CAT} + \overline{W}_{CAT}}{2} \; W_{DOE} + W_{PASSE} \qquad (3)$$

$$W_E = \frac{W_{E0} + \overline{W}_{I180}}{2} - \frac{W_{CAT} + \overline{W}_{CAT}}{2} = -\overline{W}_{DOE} + \overline{W}_{PASSE} \qquad (4)$$

Nun lassen sich sofort alle drei gesuchten Größen absolut angeben:

$$W_{DOE} = \frac{W_I - \overline{W}E}{2} \qquad (5)$$

$$W_{PASSE} = \frac{W_I + \overline{W}E}{2} \qquad (6)$$

$$W_{INT} = W_{I0} - W_I = W_{E0} - W_E \tag{7}$$

Da man die Interferometerfehler gemäß (7) auf zwei Weisen bestimmen kann, ist es im Hinblick auf eine verbesserte Meßgenauigkeit vorteilhaft, von beiden Ergebnissen den arithmetischen Mittelwert zu verwenden.

Ist man nur an den DOE-Aberrationen interessiert, kann man auch auf die Katzenaugenposition verzichten und $W_{DOE}$ allein aus (1a ... 1e) berechnen:

$$W_{DOE} = \frac{W_{I0} - W_{E180}}{2} = \frac{\overline{W}/180 - \overline{W}E0}{2} \tag{8}$$

Wie man sieht, reichen dazu wenigstens zwei Messungen aus.

Im Hinblick auf eine hohe Meßgenauigkeit ist es aber auch hier wieder sinnvoll, von beiden Ergebnissen den Mittelwert zu nehmen, also vier Messungen abzuwarten.

Diese vereinfachte Auswertung ist z.B. dafür geeignet, die Meßgenauigkeit eines DOE-Schreibgerätes zu bestimmen.

Auf die Katzenaugenstellung, die mitunter in der Praxis Ungenauigkeiten aufweisen kann, kann man gegebenenfalls auch verzichten, wenn man ein hochplanes DOE-Substrat fertigt und dessen Passefehler separat interferometrisch oder taktil bestimmt. Dabei kann man beim Schreiben des DOE einen Weg wählen, bei dem sichergestellt ist, daß das DOE die Substratpassefehler nicht verändert. Dies ist z.B. bei einem dicken Substrat und einem DOE-Material das wenig Spannungen ausübt, wie z.B. Photoresist, der Fall. Bestimmt man auf diese Weise die DOE-Aberrationen ohne Katzenaugenstellung nach der Gleichung (8) absolut, so kennt man wiederum genau alle Aberrationen des DOE und hat trotzdem die Katzenaugenstellung umgangen.

Die Gleichung (8) zeigt somit, daß die Katzenaugenstellung nur nötig ist, um Passefehler von Interferometerfehlern zu trennen. Bestimmt man die Passefehler separat, so braucht man keine Katzenaugenstellung.

Durch die vorstehend genannte Messung erhält man eine verbesserte Genauigkeitsabschätzung für die Absolutkalibrierung. Dies liegt unter anderem daran, daß nicht nur - wie beim Stand der Technik - mit drei Messungen operiert wird, sondern mit fünf auf andere Weise erzeugte Messungen, wobei sich Fehler besser weg-mitteln lassen.

Die Aberrationen des DOEs und die Substratpassefehler sind somit absolut gemessen. In diesem Sinne ist das Verfahren ein Absolutkalibrierverfahren für DOE, die in der beschriebenen Weise ausgeführt sind. Man kann somit auch die Schreibgenauigkeit des DOE beurteilen. Dies ist von Bedeutung zur Charakterisierung des Schreibprozesses. Insbesondere kann man für einen Vergleich verschiedener DOE-Schreiber ein für das vorstehend beschriebene Meßverfahren geeignetes DOE auf allen Schreibern schreiben lassen, die DOEs absolut vermessen und damit die Qualität der Schreiber beurteilen.

Nach der Absolutvermessung des DOE kann man das nun in seinen strahlablenkenden Eigenschaften genau bekannte DOE als Normalelement in anderen optischen Geräten, beispielsweise in anderen Interferometern, als dem zur Messung verwendeten, einsetzen und diese damit kalibrieren.

Man kann auch das DOE einmal sehr genau vermessen und später das zur Messung verwendete Interferometer damit nachkalibrieren.

Kann man ausgehend von der Katzenaugenstellung die beiden anderen Positionen mit hoher Genauigkeit anfahren, so verbessert sich die Meßgenauigkeit, insbesondere für die rotationssymmetrischen Beiträge zu den Aberrationen. Insbesondere wird es möglich, auch den Defokus als DOE-Aberration absolut zu messen. Eine geeignet hohe Verschiebegenauigkeit würde zum Beispiel durch den Einsatz eines Laserweglängenmeßsystems möglich werden; auch andere Wegmeßeinrichtungen sind denkbar. Ist eine solche präzise Verschiebung nicht möglich, wird man intra- und extrafokal das DOE auf gerade Streifen (Defokus null) und möglichst wenig Aberrationen im Interferogramm manuell justieren.

Arbeitet man nicht in den ±1., sondern in höheren, ±m-ten Beugungsordnungen, so multiplizieren sich bei gleichen DOE-Schreibfehlern die beobachteten DOE-Aberrationen mit dem Faktor m. Umgedreht heißt dies, daß die Meßempfindlichkeit für DOE-Schreibfehler mit eben diesem Faktor steigt. Eine solche, höhere Beugungsordnung würde bedeuten, daß das Interferometerobjektiv recht stark geöffnet ist, Öffnungszahlen bis hinab zu F/0,5 sind aber machbar und stellen kein besonderes Problem dar. Solche Anordnungen ergeben die Möglichkeit DOE-Schreibfehler hochempfindlich zu messen.

In einer weiteren Ausgestaltung könnte man auch mehr als zwei Drehstellungen einführen. Bei zum Beispiel zwölf Drehstellungen wird man jeweils zwei gegenüberliegende nach den obigen Gleichungen auswerten und das Meßergebnis entsprechend zurückdrehen. Man erhält dann mehr Einzelmessungen, was zu einer genaueren Messung führt.

Da das DOE auf einer Planfläche liegt, ist die Beugung nicht aplanatisch. Man muß gegebenenfalls mit Dejustagekoma rechnen. Von Vorteil ist es deshalb, die DOE-Halterung mechanisch präzise verstellbar auszuführen. Insbesondere die mechanische Drehachse sollte mit dem DOE-Mittelpunkt möglichst genau zusammenfallen.

Es hat sich herausgestellt, daß es für eine hohe DOE-Stabilität sinnvoll sein kann, dieses bei Ausführung als Reflexions-DOE auf Zerodur oder ein ähnliches Trägermaterial mit verschwindend kleinem thermischen Ausdehnungskoeffizienten zu schreiben. Bei Ausführung als Transmissions-DOE wäre Quarzglas vorteilhaft, weil es einen geringen thermischen Ausdehnungskoeffizienten aufweist und hochtransparent ist. Den Planspiegel auf der Rückseite stellt man am einfachsten durch eine verspiegelte Rückseite dar.

Die Verwendung eines frequenzstabilisierten Lasers kann die Meßgenauigkeit erhöhen, insbesondere wenn gleichzeitig Luftdruck, -feuchte und -temperatur aufgezeichnet werden. Man kennt dann die Laserwellenlänge in Luft sehr genau. Weicht diese von der bei der Optikrechnung verwendeten ab, so kann man eine mathematische Korrektur nachträglich durchführen. Dies kann insbesondere bei den rotationssymmetrischen Beiträgen zu den Aberrationen vorteilhaft sein.

Als Reflexions-DOE kann eine Chrommaske verwendet werden.

Mit dem vorstehenden Meßverfahren ist auch eine Absolutmessung von Aberrationen solcher DOEs möglich, die die einfallende sphärische Welle in eine asphärische Welle durch Reflexion und Beugung umformen oder durch Beugung in Transmission mit einem Planspiegel dahinter. Dabei werden in gleicher Weise vier Messungen, nämlich intra- und extrafokal jeweils in den zwei verschiedenen Drehstellungen mit den Meßergebnissen $W_{I0}$, $W_{I180}$, $W_{E0}$ und $W_{E180}$ durchgeführt.

Die in intra- und extrafokaler Position bei fehlerfreien DOE auftretenden asphärischen Wellenfronten können durch eine Optikrechnung bestimmt werden. Dabei sind die Wellenfronten rotationssymmetrisch und im allgemeinen ist $W_{I\_asph} \neq -W_{E\_asph}$.

Diese Asphärizitäten werden von den vier Meßergebnissen auf folgende Weise abgezogen:

$$W'_{I0} = W_{I0} - W_{I\_asph} \qquad W'_{E0} = W_{E0} - W_{E\_asph}$$

$$W'_{I180} = W_{I180} - W_{I\_asph} \qquad W'_{E180} = W_{E180} - W_{E\_asph}$$

Unter Verwendung der gestrichenen Größen lassen sich die DOE-Aberrationen analog zu den Gleichungen (5) oder (8) berechnen.

Mit dem erfindungsgemäßen Verfahren läßt sich auch eine Schreibprozeßkalibrierung von DOE-Schreibern erreichen. Ziel ist dabei die Bestimmung der aktuellen Schreibprozeßfehler, um diese aus einem Meßergebnis eliminieren zu können, da jeder DOE-Schreiber Restfehler besitzt.

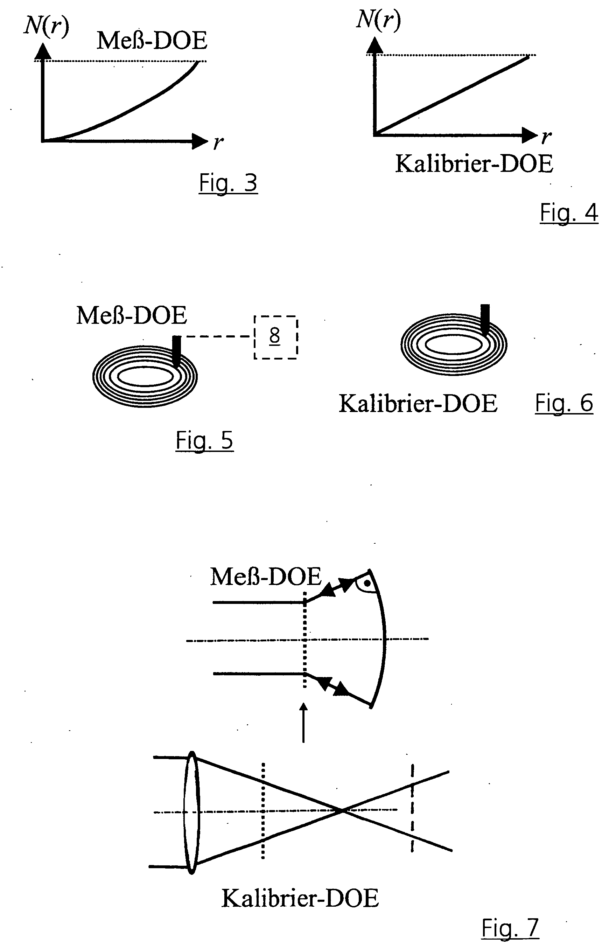

Für diesen Zweck wird von einem Schreiber ein Meß-DOE geschrieben, mit welchem später ein Prüfling vermessen werden soll. Die Figur 3 zeigt hierzu entsprechend dem Optik-Design die Verläufe der Furchendichte N über dem Radius r des DOE. Die Figur 5 zeigt hierzu in Prinzipdarstellung die Ringe des Meß-DOEs.

Das Meß-DOE ist zwangsweise mit Restfehlern behaftet. Diese systematischen Schreibfehler sollen nun durch eine Kalibrierung bestimmt werden. Hierzu wird ein zweites DOE geschrieben, dessen Furchendichteverlauf am Rand dem des Meß-DOE entsprechen soll, um weitgehend identische Bedingungen zu erhalten. Dabei ist der Furchendichteverlauf jedoch so zu wählen, daß eine Kugelwelle wieder exakt in sich zurückreflektiert wird. Der Furchendichteverlauf N des Kalibrier-DOE ist in der Figur 4 dargestellt. Eine Prinzipdarstellung des Kalibrier-DOE mit den Ringen zeigt die Figur 6.

Direkt im Anschluß an das Schreiben des Meß-DOEs wird auf dem gleichen Schreiber bzw. Schreibgerät 8 das Kalibrier-DOE gemäß Figur 4 geschrieben. Dabei wird davon ausgegangen, daß sich der Schreibprozeß nicht verändert hat. Anschließend wird das Kalibrier-DOE mit dem vorstehend beschriebenen Verfahren absolut vermessen, wobei man dann die DOE-Fehler absolut erhält. Da nun das zuvor beschriebene Meß-DOE einen ähnlichen Aufbau besitzt, wird es somit den gleichen Fehler in sich tragen. Dies bedeutet, man kann diesen Fehler anschließend abziehen und hat damit den Schreibprozeß kalibriert. Aus Figur 7 ist dies ersichtlich, wobei durch den Pfeil in Richtung zur Meß-DOE mit dem Prüfling angedeutet ist, daß damit Schreibprozeßfehler eliminiert werden.

Zur Bestimmung der Qualität von DOE-Schreibern 8 sind nur mindestens zwei Meßpositionen mit der intrafokalen und der extrafokalen Messung erforderlich. Die Katzenaugenpositionsmessung ist nicht erforderlich.

**Patentansprüche**

1. Verfahren zur Absolutkalibrierung eines Interferometers (1) mit einer kugelförmigen Ausgangswelle, mit einem optischen Element (4,4'), das die einfallende Kugelwelle selbst oder über einen Spiegel zurückreflektiert, wobei zur Bestimmung der Wellenaberration (W) wenigstens vier Meßvorgänge vorgenommen werden, wobei das optische Element (4,4') in den wenigstens vier Meßstellungen intrafokal und extrafokal in wenigstens zwei unterschiedlichen Drehwinkelstellungen vermessen wird.

2. Verfahren nach Anspruch 1, **dadurch gekennzeichnet, daß** zusätzlich wenigstens ein fünfter Meßvorgang über einen Spiegel (6) in der Katzenaugenstellung (Fokusstellung) vorgenommen wird.

3. Verfahren nach Anspruch 2, **dadurch gekennzeichnet, daß** die Messung in der Katzenaugenstellung mit einem Planspiegel (6) vorgenommen wird.

4. Verfahren nach einem der Ansprüche 1 bis 3, **dadurch gekennzeichnet, daß** das optische Element ein diffraktives optisches Element (4) ist, das in Reflexion eingesetzt wird.

5. Verfahren nach einem der Ansprüche 1 bis 3, **dadurch gekennzeichnet, daß** als optisches Element ein diffraktives optisches Element in Transmission vorgesehen ist, wobei die Reflexion der einfallenden Kugelwelle durch einen Spiegel (7) erzeugt wird.

6. Verfahren nach Anspruch 1, **dadurch gekennzeichnet, daß** die wenigstens zwei unterschiedlichen Drehwinkel durch eine 0°-Stellung des optischen Elementes und eine um 180° dazu gedrehte Stellung erzeugt wird.

7. Verfahren nach Anspruch 1, **dadurch gekennzeichnet, daß** zur Messung mehr als zwei Drehwinkelstellungen verwendet werden.

8. Verfahren nach einem der Ansprüche 1 bis 7, **dadurch gekennzeichnet, daß** zur Erhöhung der Meßgenauigkeit eine Mittelwertbildung zwischen dem intrafokalen und dem extrafokalen Meßvorgang durchgeführt wird.

9. Verfahren nach einem der Ansprüche 1 bis 8, **dadurch gekennzeichnet, daß** die Messungen in einer höheren Beugungsordnung als der ersten Beugungsordnung vorgenommen werden.

10. Verfahren nach Anspruch 4 oder 5, **dadurch gekennzeichnet, daß** die mechanische Drehachse des diffraktiven optischen Elementes (4,4') wenigstens annähernd mit dem Mittelpunkt des diffraktiven optischen Elementes zusammenfällt.

11. Verfahren nach Anspruch 4 oder 5, **dadurch gekennzeichnet, daß** ein diffraktives optisches Element (4,4') mit einem sehr geringen Ausdehnungskoeffizienten verwendet wird.

12. Verfahren nach Anspruch 11, **dadurch gekennzeichnet, daß** als diffraktive Element (4,4') bei Reflexion Zerodur und bei Transmission Quarzglas verwendet wird.

13. Verfahren nach einem der Ansprüche 1 bis 12, **dadurch gekennzeichnet, daß** als Strahlenquelle ein frequenzstabilisierter Laser (1) verwendet wird.

14. Verfahren zur Bestimmung der Meßgenauigkeit eines Schreibgerätes (8) für ein diffraktives optisches Element (4,4') mit einem Interferometer, das eine kugelförmige Ausgangswelle erzeugt mit einem diffraktiven optischen Element (4,4'), das die einfallende Kugelwelle selbst oder über einen Spiegel (7) zurückreflektiert, wobei wenigstens zwei Meßvorgänge mit dem diffraktiven optischen Element (4,4'), mindestens jeweils eine in einer intrafokalen und einer extrafokalen Stellung mit um 180° unterschiedlichen Drehwinkeln, vorgenommen werden.

Fig. 1

Fig. 2

$N(r)$ Meß-DOE

$r$

Fig. 3

$N(r)$

$r$

Kalibrier-DOE

Fig. 4

Meß-DOE

∞

Fig. 5

Kalibrier-DOE    Fig. 6

Meß-DOE

Kalibrier-DOE

Fig. 7

Europäisches
Patentamt

**EUROPÄISCHER RECHERCHENBERICHT**

Nummer der Anmeldung

EP 02 01 1008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DE 198 22 453 A (SCHWIDER JOHANNES) 23. Dezember 1999 (1999-12-23) * Spalte 2, Zeile 54 - Zeile 64 * * Spalte 4, Zeile 35 - Zeile 50 * * Ansprüche 1,2 * * Abbildungen 1A,1B * | 1-6,14 | G01B9/02 G01J9/02 |
| A | | 7-13 | |
| Y | SCHULZ G ET AL: "Calibration of an interferometer for testing cylindrical surfaces" OPTICS COMMUNICATIONS, NORTH-HOLLAND PUBLISHING CO. AMSTERDAM, NL, Bd. 117, Nr. 5, 15. Juni 1995 (1995-06-15), Seiten 512-520, XP004008480 ISSN: 0030-4018 * Absätze '0001!,'0002! * * Abbildungen 1-3 * | 1-6,14 | |
| A | | 7-13 | |
| | | | **RECHERCHIERTE SACHGEBIETE (Int.Cl.7)** |
| A | PATENT ABSTRACTS OF JAPAN vol. 1998, no. 09, 31. Juli 1998 (1998-07-31) -& JP 10 090113 A (SONY CORP), 10. April 1998 (1998-04-10) * Zusammenfassung * * Abbildungen 8,9 * | 1,14 | G01B G01J |
| A | EP 0 831 298 A (NIPPON KOGAKU KK) 25. März 1998 (1998-03-25) * das ganze Dokument * | 1-14 | |
| A | US 4 865 454 A (ULICH BOBBY L ET AL) 12. September 1989 (1989-09-12) * das ganze Dokument * | 1-14 | |

Der vorliegende Recherchenbericht wurde für alle Patentansprüche erstellt

| Recherchenort | Abschlußdatum der Recherche | Prüfer |
|---|---|---|
| MÜNCHEN | 1. Juli 2002 | Grand, J-Y |

EPO FORM 1503 03.82 (P04C03)

**EP 1 262 735 A1**

## ANHANG ZUM EUROPÄISCHEN RECHERCHENBERICHT
## ÜBER DIE EUROPÄISCHE PATENTANMELDUNG NR.

EP 02 01 1008

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-07-2002

| Im Recherchenbericht angeführtes Patentdokument | | | Datum der Veröffentlichung | Mitglied(er) der Patentfamilie | | Datum der Veröffentlichung |
|---|---|---|---|---|---|---|
| DE 19822453 | A | | 23-12-1999 | DE | 19822453 A1 | 23-12-1999 |
| JP 10090113 | A | | 10-04-1998 | KEINE | | |
| EP 0831298 | A | | 25-03-1998 | JP | 10096679 A | 14-04-1998 |
| | | | | EP | 0831298 A2 | 25-03-1998 |
| | | | | US | 6008904 A | 28-12-1999 |
| US 4865454 | A | | 12-09-1989 | KEINE | | |

EPO FORM P0461